Europäisches Patentamt

European Patent Office

Office européen des brevets

(11) Publication number: **0 145 093**
**A2**

## EUROPEAN PATENT APPLICATION

(21) Application number: **84201788.1**

(22) Date of filing: **30.11.84**

(51) Int. Cl.⁴: **F 25 B 29/00**
**F 25 B 15/00**

(30) Priority: **30.11.83 NL 8304113**

(43) Date of publication of application:
**19.06.85 Bulletin 85/25**

(84) Designated Contracting States:
**AT BE CH DE FR GB IT LI LU NL SE**

(71) Applicant: FDO Technische Adviseurs B.V.
Oostenburgermiddenstraat 62
NL-1018 MS Amsterdam(NL)

(72) Inventor: Minkhorst, Jan Hendrik
46 Kemphaanstraat
NL-1531 VE Wormer(NL)

(74) Representative: 't Jong, Bastiaan Jacobus et al,
OCTROOIBUREAU ARNOLD & SIEDSMA Sweelinckplein
1
NL-2517 GK 's-Gravenhage(NL)

(54) **Mixture cycle for a sorption heat pump.**

(57) A heat pump of the sorption type comprising at least one work medium cycle having a duct provided on the one hand with a pressure varying member and on the other hand with a condenser (3) and an evaporator (4) interconnected by a mixture cycle (60), said mixture cycle comprising an absorber (62) provided with heat dissipating means (66) and connected with the evaporator through a vapour supply channel (64) and a generator (61) provided with heat supply means (65) and connected with the condenser through a vapour outlet channel (63), said absorber and generator communicating in a cycle through a rich mixture channel (68) provided with a second pressure varying member (71) operating opposite to the first pressure varying member and passing a rich mixture from the absorber to the generator and through a poor mixture channel (67) provided with a third pressure varying member (70) operating in the same sense as the first pressure varying member and passing a poor mixture from the generator to the absorber, whilst heat exchanging means having a heat exchanging surface are arranged between the poor and rich mixture streams. The heat exchanging means comprise an auxiliary absorber (73) adjoining the absorber (62) and also communicating with the vapour supply channel (64) and an auxiliary heat exchanger (72) adjoining the generator (61) and being provided with a communication (74) allowing evacuation of vapour to the vapour outlet channel (63).

FIG.5

Mixture cycle for a sorption heat pump.

---

The invention relates to a heat pump of the sorption type as described in the preamble of claim 1.

Such a heat pump is generally used to absorb heat at a given temperature and to give it off at a higher temperature. For this purpose it is necessary to supply driving energy in the form of heat at a given temperature to the system, which heat is conducted away at a lower temperature. There are known, for example, applications in which the first and the third pressure varying members are restrictions and the second pressure varying member is a pump. The generator then operates at a higher pressure than the absorber so that the condenser also operates at a higher pressure and higher temperature than the evaporator. A heat pump thus designed may be used for heating or cooling. In the case of cooling the evaporator is arranged in communication with the space to be cooled so that the evaporator can absorb heat from said space. The absorbed heat is conducted away by the condenser, for example, to the outside.

In the case of heating the evaporator can be arranged externally so that it can withdraw heat from the surroundings. As an alternative the evaporator may be arranged internally and cause it to withdraw heat from the surroundings through an auxiliary circuit. The absorbed heat is given off in the condenser, from which it is supplied to the space to be heated.

As stated above, heat is supplied for "driving" the mixture cycle. In the use described above the heat is supplied at a relatively high temperature in the generator. This heat energy is released in the absorber, be it at a lower temperature. If the cycle is used for heating purposes the heat released in the absorber can also be supplied to the space to be heated.

In a further use in which the first and the third pressure varying members are formed by a pump and the second pressure varying member is formed by a restriction, the generator operates at a lower pressure than the absorber so that also the condenser operates at a lower pressure and a lower temperature than the evaporator. This is known by the term "heat transformer". Herein heat is supplied to the evaporator and the generator at a temperature of a medium level. In the condenser heat is conducted away at a lower temperature, whereas in the absorber heat is released at a high temperature. By means of the heat transformer for example, dissipation heat at medium-level temperature can again be utilized to obtain heat at a high temperature.

The heat exchange means mentioned in the preamble are used for exchanging heat between the mixture streams in order to raise the efficiency of the cycle process.

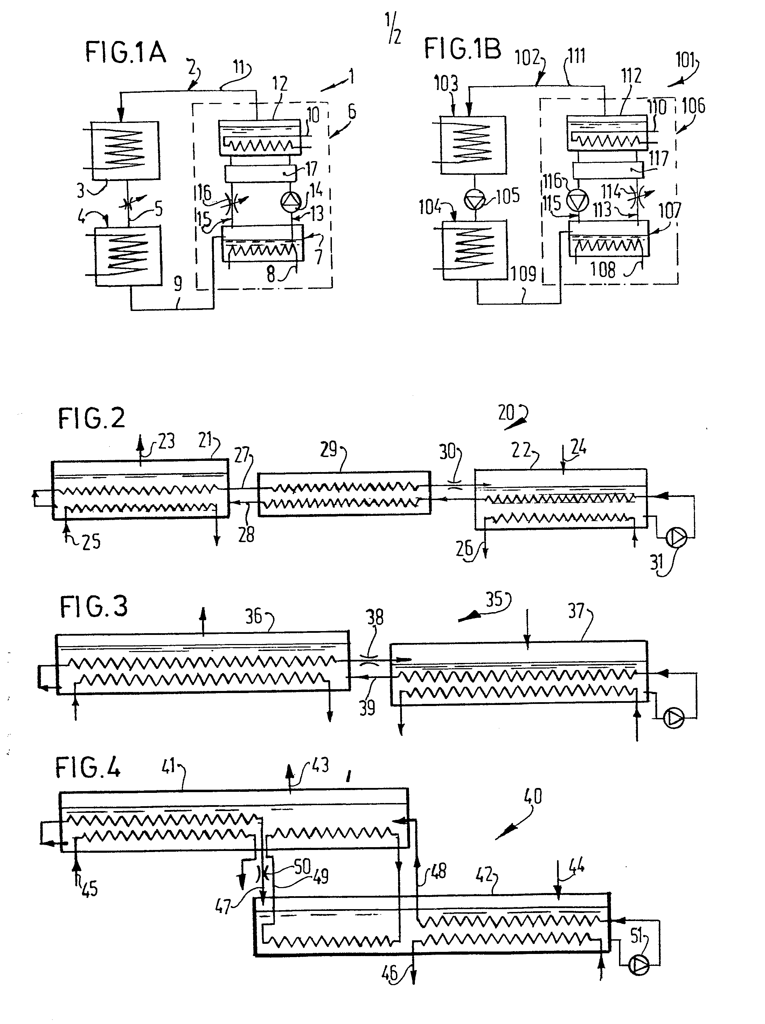

The basic operation of a sorption heat pump will be illustrated with reference to Fig. 1A and 1B, which schematically show a simple sorption heat pump.

In the heat pump of Fig. 1A the generator and the condenser in the first described application operate at a higher pressure than the absorber and the evaporator respectively. The heat pump 1 comprises a work medium cycle 2 including a condenser 3 and an evaporator 4. The condenser 3 and the evaporator 4 are interconnected on the one hand through a duct 5 including a first pressure varying member (restriction) and on the other hand through a mixture cycle 6. The mixture cycle 6 can suck in the vapourous work medium from the vapour supply duct 9 and conduct away vapourous work medium to the vapour outlet duct 11. The vapourous work medium in the vapour outlet duct 11 condenses in the condenser 3 whilst giving off heat. The pressure of the then liquid work medium is lowered by the restriction in the duct 5, after which the liquid work medium again evaporates in the evaporator 4 whilst absorbing heat. Owing to the pump effect of the work medium cycle 2 heat absorbed at a low temperature in the evaporator 4 can be given off at a higher temperature in the condenser 3. Thus by the heat pump 1 the absorbed heat can be "pumped" to a higher temperature. According as it is intended to dissipate heat in the condenser 3 or to absorb heat in the evaporator 4, the heat pump 1 may be termed a heat system or a cooling system respectively.

In the mixture cycle 6 circulates a mixture of the work medium and a substance for which this work medium has great affinity, termed the absorbent. Known mixtures are, for example, water-ammonia, in which ammonia is the work medium, and water-lithium bromide, in which water is the work medium, and a solution of lithium bromide in water is the absorbent. A common feature of the pairs of substances used is that the work medium can be very satisfactorily absorbed by the absorbent and be evaporated therefrom.

The mixture cycle 6 includes an absorber 7 and a generator 12. The absorber 7 is provided with heat dissipation means 8. To the absorber 7 is supplied poor mixture through a poor mixture channel 15 from the generator 12. "Poor" is to be understood to mean in this respect that relatively little work medium is absorbed in the carrier fluid. On the contrary, "rich" is to mean that much work medium is absorbed. In the absorber 7 vapour from the vapour supply duct 9 is absorbed by the poor mixture, which thus becomes "rich". During the absorption heat is released which is conducted away by the heat dissipation means 8. The rich mixture is supplied to the generator 12 through the rich mixture channel 13 including a pump 14 (second pressure varying member). In the generator 12 the heat supply means 10 impart heat to the rich mixture. Owing to the supllied heat work medium evaporates from the rich mixture, the vapourous work medium being introduced into the work medium cycle through the vapour outlet duct 11. According as the mixture is further evaporated it becomes poorer and after the passage through the generator 12 the mixture is again supplied as a poor mixture to the absorber 7 through the poor mixture channel 15 including the restriction 16 (third pressure varying member), where the cycle starts again.

The heat pump of Fig. 1B is used as a so-called heat transformer. The components corresponding with those of the heat pump of Fig. 1A are designated by reference numerals to which 100 is added. The difference between the heat pump 101 of Fig. 1B and the heat pump 1 of Fig. 1A resides in that the first pressure varying member forming a restriction in the heat pump 1 is formed by a pump in the heat pump 101. Likewise the second pressure varying member and the third pressure varying member are a restriction 114 and a pump 116 in the heat pump 101 rather than a pump 14 and a restriction 16 of the heat pump 1. From a comparison of Fig. 1B with Fig. 1A on the basis of the preceding description of Fig. 1A it will be apparent that in the heat pump 101 the generator 112 and the condenser 103 operate at a lower pressure than the absorber 107 and the evaporator 104. This means that in the condenser 103 heat is given off at a lower temperature than that of the heat absorbed in the evaporator 104. Likewise the generator 112 operates at a lower temperature than the absorber 107. Since, moreover, like in the heat pump 1 of Fig. 1A the generator 112 always operates at a higher temperature than the condenser 103 and the absorber 107 operates at a higher temperature than the evaporator 104, it will be apparent that in the heat pump 101 during operation, heat at a medium-level temperature has to be supplied to the evaporator 104 and the generator 112, whereas in the condenser 103 heat is dissipated at a lower temperature and in the absorber 107 heat is given off at a higher temperature. As stated above, in the heat pump 101 waste heat released at a medium-level temperature can be utilized to obtain heat at a higher temperature.

With regard to the analogy between the heat pump 1 and the heat pump 101 only the heat pump 1 will be described further hereinafter for the sake of briefness. The statements made in hereinafter with respect to the heat pump 1 apply _mutatis mutandis_ also to the heat pump 101.

The pressure in the absorber 7 depends on the pressure of the work medium in the evaporator 4. This pressure is equal to the vapour pressure of the work medium at the temperature prevailing in the evaporator. In a corresponding manner the pressure in the generator 12 depends on the pressure of the vapourous work medium in the condenser 3. This pressure is equal to the vapour pressure at the temperature prevailing in the condenser. The temperature of the poor mixture leaving the generator 12 is higher than the temperature the poor mixture must have at the beginning of the absorption process. At the addition of this mixture to the absorber considerable losses of irreversibility are thus involved so that the mixture in the absorber starts desorbing. Moreover, the temperature of the rich mixture leaving the absorber is lower than the temperature of this rich mixture required at the beginning of the desorption process in the generator 12. Consequently, also in this case considerable losses of irreversibility are involved when this rich mixture is directly supplied to the generator, in which generator absorption occurs.

In order to minimize said irreversibilities the aforesaid heat exchange means are provided, which are formed in the simple diagram of Fig. 1 by a heat exchanger 17.

In view of the pressure differences in the absorber and the generator it will be apparent that the lowest temperature in the absorber is always lower than the lowest temperature in the generator, whereas the highest temperature in the generator will always be higher than the highest temperature in the absorber. With respect to the relationship between the highest temperature of the absorber and the lowest temperature in the generator there may be three different situations. In a first situation the lowest temperature in the generator is higher than the highest temperature of the absorber. In a second case these temperatures are equal to one another, whereas in a third case the lowest temperature of the generator is lower than the highest temperature of the absorber.

In dependence on any of these situations devices shown in Figs. 2, 3 and 4 may be used respectively. These devices have a higher degree of efficiency than the devices of Fig. 1. The components of the mixture cycle are shown in a manner generally used in the art. The relative temperature at a given place in the system is apparent from the position of said place in a horizontal direction. In the systems shown in Figs. 2 to 4 the temperature decreases from left to the right. This means that a stream flowing from left to the right cools down and a stream flowing from right to left heats up.

Only the mixture cycle of the heat pump is illustrated. The mixture cycle 20 of Fig. 2 comprises in the manner shown a generator 21 and an absorber 22. With the generator 21 communicates the vapour outlet duct 23 and with the absorber 22 the vapour inlet duct 24. The generator 21 comprises heat supply means 25, whereas the absorber 22 includes heat dissipation means 26. From the indicated flow directions of the heat supply means 25 and the heat dissipation means 26 it is apparent that a cooling medium stream and a heating medium stream i.e. a stream giving off heat and a stream absorbing heat respectively are concerned here. The poor mixture arrives through the poor mixture channel 27 including a restriction 30 at the absorber 22. Therein the mixture is absorbed whilst giving off heat to the work medium and the mixture leaves the absorber as a rich mixture on the right-hand side, that is to say, at a lower temperature. The rich mixture is pumped through the pump 31 into the rich mixture channel 28. As is shown in the Figures the beginning of the rich mixture channel extends across the absorber from the relative cold side to the relatively hot side. The heat released in the absorber is thus used for heating up the rich mixture stream and the heat dissipation means. For the sake of simplicity it is assumed that at any place in the absorber the temperatures of the rich mixture and of the heat dissipation means are equal. The rich mixture thus leaves the absorber ar a temperature substantially equal to the highest temperature of the heat dissipation means. For a good understanding of the invention it is assumed that the heat dissipation means are controlled to the optimum so that the heat dissipation means and the rich mixture when leaving the absorber have at least substantially the highest absorber temperature. In a similar manner the poor mixture stream is fed back from the generator 21 so that it leaves the generator at substantially the lowest generator temperature. It is also assumed that the heat supply means are controlled to the optimum.

As stated above, the mixture cycle 20 of Fig. 2 is concerned with the situation in which the lowest generator temperature is higher than the highest absorber temperature. In order to compensate approximately for this difference the heat exchanger 29 is included in the poor mixture channel 27 and in the rich mixture channel 28. In the cycle 20 of Fig. 2 the heat exchanging means thus include the return ducts through the absorber and the generator and the heat exchanger 29. Owing to these heat exchanging means maximum efficiency of the cycle 20 is obtained.

The mixture cycle 35 of Fig. 3 includes a generator 36 and an absorber 27 and largely corresponds with the cycle 20 of Fig. 2. As stated above, the mixture cycle 35 is used in those cases in which the conditions are such that the lowest temperature of the generator 36 is equal to the highest temperature of the absorber 37. The poor mixture leaves the generator 36 through the poor mixture channel 38 at substantially the lowest temperature of the generator. For this purpose the poor mixture is cooled by passing it again through the generator 36 from the highest generator temperature to substantially the lowest generator temperature. The poor mixture channel 38 can pass the poor mixture directly through a restriction into the absorber since it has the temperature suitable for this purpose. In a similar manner the rich mixture, when leaving the absorber 37, has substantially the highest absorber temperature which is equal to the lowest generator temperature so that the rich mixture channel 39 can pass the rich mixture directly from the absorber to the generator. In an ideal case the poor mixture stream would leave the generator, of course, at accurately the lowest generator temperature and the rich mixture stream would leave the absorber at exactly the highest absorber temperature. In practice, as is known, this cannot be realized due to finite stream rates, to heat resistances and to unequal heat capacities and flow strengths.

The cycle 40 of Fig. 4 is used when the lowest temperature of the generator is lower than the highest temperature of the absorber.

The cycle 40 includes a generator 41 and an absorber 42. With the generator 41 communicates the vapour outlet duct 43 of the work medium cycle and with the absorber 42 communicates the vapour supply duct 44 thereof. The generator 41 comprises heat supply means 45, whereas the absorber 42 comprises heat dissipation means 46. The poor mixture of the generator 41 flows through the poor mixture channel 47 including a restriction 50 to the absorber. The rich mixture of the absorber 42 flows through the pump 51 and the rich mixture channel 48 to the generator 41. Between the generator 41 and the absorber 42 there is furthermore arranged an auxiliary cycle 49, which transfers heat from the absorber 42 to the generator 41, since it is possible to utilize the heat released in the absorber 42 in the temperature range between the lowest generator temperature and the highest absorber temperature in the generator 41. Since part of the heat released in the absorber 42 is again used in the generator 41, the performance coefficient of the heat pump cycle can drastically increase in this condition of relatively low pressure difference between the evaporator and the condenser. The performance coefficient of the heat pump is the quotient of the heat effectively transported by the heat pump and the heat fed into the generator. In a cooling system the heat absorbed in the evaporator is this effectively transported heat, whereas in a heating system it is the heat released in the condenser plus the heat released in the absorber.

The strong increase in performance coefficient can be accounted for as follows. It will be simply recognized that the overall heat energy supplied in the generator 41 is substantially equal to the heat energy conducted away in the absorber 42. If the entire heat released in the absorber 42 could be supplied to the generator 41, the mixture cycle would continue running without supply of external heat energy so that heat transport would continue in the work medium cycle. Then the performance coefficient would become infinite. However, in view of the fact that a pressure difference has to be maintained between the generator and the absorber in order to keep the work medium cycle moving, a temperature difference must be maintained between the hot side of the generator and the absorber and between the cold side of the generator and the absorber. Under given conditions i.e. a relatively small difference between the temperature of the condenser and the evaporator and a high temperature on the hot side of the generator and a low temperature on the cold side of the absorber high values of the performance coefficient can yet be obtained in practice.

In a heat transformer, in which the evaporator and the absorber, as stated above, operate at a higher pressure and hence at a higher temperature than the condenser and the generator respectively, fully analogous situations occur. The three relationships discussed with reference to Figs. 2 to 4 occur in such a use of the sorption heat pump between the lowest absorber temperature and the highest generator temperature. In analogy with the foregoing it will be understood that when the lowest absorber temperature is higher than the highest generator temperature an arrangement of the kind shown in Fig. 2 can be used, that when the lowest absorber temperature is equal to the highest generator temperature an arrangement of the kind shown in Fig. 3 is used, whereas when the lowest absorber temperature is lower than the highest generator temperature the heat released in the absorber in this overlapping temperature region can be supplied to the generator with the aid of an arrangement of the type shown in Fig. 4.

In view of the substantial analogy between the use of the sorption heat pump with a higher absorber pressure than the generator pressure and of that with a lower absorber pressure than the generator pressure it is sufficient to describe only one of these uses for explaining the invention.

Hereinafter the invention will, therefore, be described with reference to the use discussed in the foregoing with reference to Figs. 1 to 4.

The embodiments described and discussed for a heat pump are known. The "Handbuch der Kältetechnik" - Vol. 7: "Sorptionskältemaschinen" Editor Springer Verlag shows and describes on page 13 to page 16 arrangements for an absorption heat pump corresponding, for example, to Figs. 2, 3 and 4. As stated above, each of these arrangements provides the maximum performance coefficient for a given relationship of the lowest generator temperature and the highest absorber temperature. By appropriate proportioning of the heat exchanging surfaces the highest generator temperature and the lowest absorber temperature can vary within given limits. The conditions must, however, not vary to an extent such that the given relationship between the lowest generator temperature and the highest absorber temperature changes. If, for example, in the cycle 40 of Fig. 4 intended for an overlap of the generator and absorber temperatures i.e. a situation in which the lowest generator temperature is lower than the highest absorber temperature, a variation in condition occurs so that, for example, the lowest generator temperature had to be higher than the highest absorber temperature, the performance coefficient decreases very strongly. It will be easily understood that at the place of the auxiliary cycle 49 absorption will occur in the generator and desorption will occur in the absorber.

Therefore, the known sorption heat pumps are less suitable for situations in which the conditions may vary in the manner described.

The invention has for its object to provide a heat pump of the kind set forth in the preamble which has a maximum performance coefficient within widely varying operational conditions.

This is achieved in a heat pump embodying the invention by the measures as described in the characterizing part of claim 1. As will be described more fully hereinafter the heat pump can thus operate to the optimum both when the

11

0145093

lowest generator temperature is equal to the highest absorber temperature and the former is higher or lower.

In a further embodiment of the heat pump in accordance with the invention the auxiliary heat exchanger is designed so that no free separation plane can be formed between the rich mixture and the vapour. Thus in the auxiliary heat exchanger desorption may occur in one part and in a further part only heat exchange without absorption can take place. As will become apparent hereinafter, the flexibility of the heat pump embodying the invention is thus further enhanced.

In accordance with the invention the auxiliary heat exchanger can advantageously be integral with the generator. In this way a compact structure can be obtained.

When furthermore in accordance with the invention the auxiliary absorber is integral with the absorber and is designed so that a free plane of separation can be formed between the poor mixture and the vapour the number of separate components of the heat pump can be further reduced so that also the number of communication ducts can be reduced.

The invention will be described more fully hereinafter with reference to the accompanying drawings of embodiments of the invention.

Figs. 1 to 4 show the known constructions already described.

Fig. 5 schematically shows a heat pump embodying the invention.

Figs. 6, 7 and 8 show further embodiments of the heat pump in accordance with the invention.

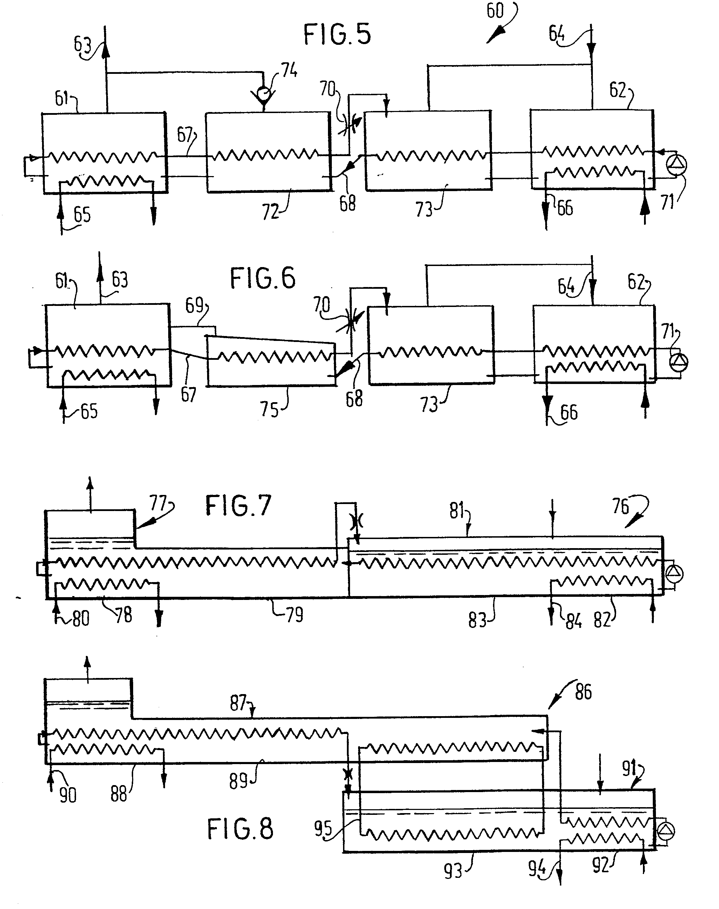

In a manner corresponding to Figs. 2 to 4 Fig. 5 only shows the cycle 60 of the heat pump embodying the invention. The mixture cycle 60 includes a generator 61 and an absorber 62. The work medium cycle communicates by the vapour outlet duct 63 with the generator 61 and by the vapour inlet duct 64 with the absorber 62. The generator 61 is provided with heat supply means 65 and the absorber 62 is provided with heat dissipation means 66. The poor mixture evaporated in the generator 61 flows through the poor mixture channel 67 back

**0145093**

to the absorber. In the absorber vapourous work medium is absorbed whilst giving off heat to the heat dissipation means 66 so that at the end of the absorber 62 the mixture is rich. The rich mixture flows through the pump 71 through the rich mixture channel 68 to the generator 61. In the poor mixture channel 67 is included in known manner a restriction 70, where during its passage the mixture experiences a drop in pressure.

In the manner described in the foregoing heat exchanging means are included in the rich mixture channel 68 and in the poor mixture channel 67. The heat exchanging means comprise in the first place the return channels by which in the generator 61 the poor mixture and in the absorber 62 the rich mixture is fed back through the generator 61 and the absorber 62 respectively. Thus when leaving the generator 61 the poor mixture has substantially the lowest generator temperature, whereas when leaving the absorber 62 the rich mixture has substantially the highest absorber temperature.

According to the invention the heat exchanging means also comprise an auxiliary heat exchanger 72 and an auxiliary absorber 73. In the auxiliary heat exchanger 72 the rich mixture can heat up whilst the poor mixture is cooled in the poor mixture channel 67. In the auxiliary absorber 73 the poor mixture supplied through the restriction 70 can absorb vapourous work medium whilst giving off the then released heat to the rich mixture in the rich mixture channel 68. The auxiliary heat exchanger 72 is designed so that vapour can only be conducted away to the vapour outlet channel 63. In the embodiment shown this is ensured by means of a non-return valve 74 in the duct leading to the vapour outlet duct.

The three possible relationships of the lowest generator temperature and the highest absorber temperature will now be discussed in order of succession.

In the case in which normally an arrangement as shown in Fig. 2 is used i.e. the situation in which the lowest generator temperature is higher than the highest absorber temperature, the auxiliary heat exchanger 72 is simply operating as a heat exchanger. Because the temperature of the rich mixture in the auxiliary heat exchanger 72 is lower than the temperature in the generator 61 no desorption occurs. Since no vapour can be supplied from the vapour outlet channel 63 or the generator 61 no absorption can occur in the heat exchanger 72. The rich mixture passing through the auxiliary absorber 73 already has approximately the highest temperature at the inlet of the auxiliary absorber 73. At the pressure prevailing in the absorber no absorption occurs at this temperature. The rich mixture can thus not give off heat in the auxiliary absorber 73 so that no absorption occurs in the auxiliary absorber 73 and the temperature of the entire auxiliary absorber 73 becomes equal to the highest absorber temperature. Consequently under this condition the auxiliary absorber 73 does not have any function. Owing to the heat exchanger effect of the auxiliary heat exchanger 72 no significant temperature leaps occur in the mixture cycle 60 of Fig. 5 at the relative state described of the lowest generator temperature and the highest absorber temperature, whilst no absorption or desorption will occur at undesirable places. Thus the mixture cycle 60 can operate with maximum efficiency. In practice discrepancies occur, of course, in the ideal situation described. For example, the rich mixture cannot leave the absorber in practice at a temperature equal to the highest absorber temperature; said temperature will be slightly lower. In the auxiliary absorber 73 some absorption will occur. With a satisfactory proportioning of the component said and similar deviations may remain slight so that they may be neglected for the further description.

In the case in which the lowest generator temperature is equal to the highest absorber temperature, in which case the arrangement of Fig. 3 has usually been used, the cycle 60 also operates with maximum efficiency. Between the poor mixture in the poor mixture channel 67 and the rich mixture in the rich mixture channel 68 there is, on approximation, no temperature difference so that no heat transfer occurs. It will be obvious that, moreover, the rich mixture in the auxiliary heat exchanger 72 is in a state of equilibrium and that also the poor mixture is in a state of equilibrium in the

14

0145093

auxiliary absorber 73. The auxiliary heat exchanger 72 and the auxiliary absorber 73 assume as a whole the temperature equal to the lowest generator temperature and the highest absorber temperature. The auxiliary heat exchanger 72 and the auxiliary absorber 73 thus have no function in this situation.

In the foregoing no difference has been made between the highest absorber temperature and the highest absorption temperature on the one hand and between the lowest generator temperature and the lowest desorption temperature on the other hand, since absorption took place exclusively in the absorber and desorption exclusively in the generator. For a good understanding of the operation of the cycle 60 in the overlap situation it is now necessary to distinguish between these concepts. The lowest desorption temperature is herein the temperature at which the rich mixture starts desorbing. The highest absorption temperature is the highest temperature at which the poor mixture can absorb vapour. In the process these temperatures thus correspond to the beginning of the desorption and the beginning of the absorption respectively.

In order to be able to utilize to the optimum the overlapping generator and absorber temperatures in the ideal situation the heat dissipation means 66 have in the first place to be set that the rich mixture in the rich mixture channel 68 has approximately the lowest desorption temperature already when leaving the absorber 62. In the auxiliary absorber 73 absorption occurs, as will be described hereinafter, so that heat is released, which is picked up by the rich mixture in the rich mixture channel 68 in the auxiliary absorber 73. Thus desorption already occurs in the rich mixture channel. The rich mixture carrying along with it desorbed vapour is passed through the auxiliary heat exchanger 72. On the side of the auxiliary absorber 73, where the poor mixture is supplied through the restriction, the highest absorption temperature sets automatically. This highest absorption temperature corresponds again (upon approximation) with the temperature at which the poor mixture leaves the generator 61. In the auxiliary heat exchanger 72 no heat exchange occurs. Thus the rich mixture in the rich mixture channel 68 partly evaporated in the auxiliary absorber 73 gets into the generator 61, where it further evaporates whilst heat is supplied by the heat supply means 65. The poor mixture is fed back in known manner through the generator 61 and as stated above, it leaves the generator 61 at a temperature which is substantially equal to the highest absorption temperature also by a suitable control of the heat supply means. The poor mixture passes through the restriction 70 to the auxiliary absorber 73. There absorption occurs whilst heat is given off to the rich mixture in the rich mixture channel 68. The vapour is supplied through the vapour supply duct 64. The poor mixture, in which an amount of vapour has been absorbed, then flows towards the absorber 62, where the last absorption occurs whilst heat is conducted away by the heat dissipation means 66. The rich mixture is then again pumped by the pump 71 into the rich mixture channel 68 and after feedback through the absorber 62 it gets into the auxiliary absorber 73, where it starts evaporating in the rich mixture channel 68 in the manner described above.

It will be obvious that also in the overlap situation the cycle of the mixture approaches as much as possible a reversible process so that optimum efficiency is attained.

Consequently the sorption heat pump embodying the invention can operate under operational conditions in which the lowest temperature of the generator is higher than the highest temperature of the absorber, these temperatures are equal to one another or the lowest temperature of the generator is lower than the highest temperature of the absorber.

In the foregoing description it has been assumed for the embodiment of the heat pump in accordance with the invention shown in Fig. 5 that the heat supply means 65 and the heat dissipation means 66 are operating at the optimum for the process. This means that it is assumed that exactly the correct amount of heat is supplied and dissipated in exactly the correct temperature range. In the case in which the auxiliary heat exchanger 72 has exclusively a heat exchanger function in the manner corresponding to the system of Fig. 2

**0145093**

it is assumed, for example, that the heat supply means are controlled so that the heat supply medium thereof cools down exactly to the lowest desorption temperature. Likewise it is assumed that the heat dissipation means 66 are operating so that the heat dissipation medium therein heats up to the highest absorption temperature.

In given uses of the heat pump embodying the invention, more particularly as a heating device, the heat supply means 65 and the heat dissipation means 66 are, however, not controlled in said way. The heat supply means 65 may, for example, comprise a cycle including a conventional boiler. The heating medium is circulated at a constant rate, whilst the temperature of the medium circulating in this cycle is more or less constant at the outlet of the boiler. The heat pump will be proportioned so that at a minimum evaporator temperature the heating means supply such an amount of heat that the heating medium in the generator cools down exactly to the lowest desorption temperature. When the evaporator temperature exceeds the minimum temperature, the heat supply means need supply less heat so that the heating medium would cool down to a lesser extent. As a result and because also the lowest desorption temperature drops, the poor mixture gets into the auxiliary heat exchanger at a higher temperature than the lowest desorption temperature. This means that in the left-hand part of the auxiliary heat exchanger desorption may occur, whereas the right-hand part of the auxiliary heat exchanger operates as a heat exchanger. It is then possible that vapour gets into the part of the auxiliary heat exchanger which has to operate as a heat exchanger so that at his place absorption may take place in an undesired manner.

In this use a corresponding problem is involved on the absorption side. The heat pump will be proportioned and controlled in a manner such that at the minimum evaporator temperature the heat dissipation medium leaves the absorber at the highest absorber temperature. At a higher evaporator temperature the highest absorber temperature is also higher so that in this case the heat dissipation medium should have to be conducted away also at a higher temperature. Since in this use the evaporator temperature depends on the outdoor temperature it will be obvious that at a higher evaporator temperature the need for heat is lower so that the heat dissipation means need dissipate less heat. The highest absorption temperature thus occurs in the auxiliary absorber so that absorption will take place therein.

In order to avoid the problems described involved in the auxiliary heat exchanger in the aforesaid example of use as a heating system, the heat pump is designed in accordance with a further development of the invention, in a manner such that the auxiliary heat exchanger is constructed so that a free separation plane cannot be formed between the rich mixture and the vapour. This further development of the heat pump embodying the invention is shown in Fig. 6.

In the prior art various constructions are known to ensure that no free separation place can set up between the rich mixture and the vapour. Fig. 6 schematically shows a solution in which the upper boundary wall of the auxiliary heat exchanger 75 is located below the fluid level in the generator 61. All vapour released in the auxiliary heat exchanger 75 is directly conducted away by gravity through the duct 69 to the generator 61, where this vapour can escape through the vapour outlet duct 63. Feeding vapour back from the generator 61 to the auxiliary heat exchanger 75 is not possible. The further parts of the mixture cycle shown in Fig. 6 correspond with those of Fig. 5 and are designated by the same reference numerals.

Fig. 7 again shows only the mixture cycle 76 in a further advantageous development of the heat pump embodying the invention. The mixture cycle 76 comprises a generator 77 and an absorber 81. From the foregoing description it will be apparent that part of the generator 77 which is "main generator" is determined by the heat supply means 80. At the side of this main generator 78 is arranged the auxiliary heat exchanger 79. In this embodiment, like in the embodiment of Fig. 6, evacuation of vapour can exclusively occur in the auxiliary heat exchanger 79 since no free interface is formed between vapour and mixture. When the temperature of the heat supply medium in the heat supply means 80 is higher, when leaving the generator, than the lowest desorption temperature, desorption will already take place in part of the auxiliary heat exchanger 79. The resultant vapour is carried along in the form of bubbles by the mixture towards the main generator 78, where it is conducted away in the known manner. In accordance with the operational conditions the place at which the desorption starts in the generator/auxiliary heat exchanger 77, 79 can set itself freely.

According to a further aspect of the invention the absorber 81 is constructed in a corresponding manner as a main absorber 82 determined by the heat dissipation means 84 and an adjoining auxiliary absorber 83. In the auxiliary absorber 83, like in the main absorber, a free interface can set up between the poor mixture and the vapour. The mode of operation of the mixture cycle 76 of Fig. 6 in the situations described with reference to Figs. 3 and 4 completely corresponds with that of the mixture cycle 60 of Fig. 5 so that a further description thereof may be dispensed with.

The heat pump embodying the invention may also be provided with an auxiliary cycle. Fig. 8 shows such an embodiment. The mixture cycle 86 comprises a generator 87 divided into a main generator 88 and an auxiliary heat exchanger 79. The part of the generator 87 termed the main generator is determined by the heat supply means 90. The absorber 91 comprises a main absorber 92 and an auxiliary absorber 93. Also in this case the part of the absorber 91 termed the main absorber is determined by the heat dissipation means 94. Between the auxiliary heat exchanger 89 and the auxiliary absorber 93 extends an auxiliary cycle 95, which transports heat from the auxiliary absorber 93 to the auxiliary heat exchanger 89.

From the foregoing it appears that the heat pump embodying the invention operates under highly varying operational conditions. The pump automatically matches these conditions. The flexibility of the heat pump embodying the invention has advantages both when the heat pump embodying the invention is used as a cooling system and when it is used as a heating system or as a heat transformer. The operational conditions for a cooling device vary, however, generally less than those of a heating system. In a cooling device, for example, the cooling temperature i.e. the temperature of the evaporator is more or less constant, whereas the temperature at which the heat has to be conducted away i.e. the condenser temperature does not vary excessively. If this condenser temperature is sufficiently high to dissipate the heat, for example, in the open air, the cooling device will operate satisfactorily. If it is desired to have a variable cooling temperature, in which case the condenser temperature and the evaporator temperature vary, the heat pump embodying the invention can be advantageously employed.

When the heat pump embodying the invention is used for heating purposes, the advantages are particularly conspicuous, since in this case the evaporator withdraws heat from the surrounding. The ambient temperature may strongly vary during use, for example, from −5° C to +20° C. The heat pump embodying the invention automatically adapts itself to the ambient temperature. When the ambient temperature becomes high, the overlap situation automatically sets in by variation of the low evaporation pressure in the manner described above so that the associated low energy consumption is obtained.

The heat pump embodying the invention also adapts itself to the heating temperature. A lower heating temperature results in that the heat dissipation means 66 can conduct away heat at a lower temperature. The absorber temperature thus decreases so that the overlap situation with the associated high efficiency is set. When the heat pump is used for low temperature heating, for example, floor heating or air heating, a high degree of efficiency can be attained. The heat pump embodying the invention is, therefore, particularly suitable for replacing existing heating systems. The heat pump will operate optimally both in high temperature heating systems and in low temperature heating systems, be it that in the latter case the degree of efficiency is higher. Moreover with respect to manufacturing technology the heat pump embodying the invention has great advantages since for the various heating systems only one heat pump need be manufactured. This means in particular that by a single product both the replacement market and the new product market can be covered.

In the Figures the components of the heat pump concerned are invariably shown as components of the pipe type. In this case each time two fluid streams including the return flow, i.e. three fluid streams are in thermal contact with one another. The wave lines indicate the pipe bundles (helices surrounded by the medium with which heat exchange takes place). Since such structures of the components are generally known in the art, the schematic representations of the Figures will be sufficient for clarifying the invention.

The invention is, however, not limited to components of the pipe type. The invention may be applied to any desired design of the sorption heat pump. Other possibilities are, for example, constructions of the plate-vane type or constructions of the type having stacked plates, which plates may be pressed or etched.

Claims

1. A heat pump of the sorption type comprising at least one work medium cycle having a duct provided on the one hand with a pressure varying member and on the other hand with a condenser (3) and an evaporator (4) interconnected by a mixture cycle (60), said mixture cycle comprising an absorber (62) provided with heat dissipating means (66) and connected with the evaporator through a vapour supply channel (64) and a generator (61) provided with heat supply means (65) and connected with the condenser through a vapour outlet channel (63), said absorber and generator communicating in a cycle through a rich mixture channel (68) provided with a second pressure varying member (71) operating opposite to the first pressure varying member and passing a rich mixture from the absorber to the generator and through a poor mixture channel (67) provided with a third pressure varying member (70) operating in the same sense as the first pressure varying member and passing a poor mixture from the generator to the absorber, whilst heat exchanging means having a heat exchanging surface are arranged between the poor and rich mixture streams c h a r a c t e r i z e d in that the heat exchanging means comprise an auxiliary absorber (73) adjoining the absorber (62) and also communicating with the vapour supply channel (64) and an auxiliary heat exchanger (72) adjoining the generator (61) and being provided with a communication (74) allowing evacuation of vapour to the vapour outlet channel (63).

2. A heat pump as claimed in Claim 1 c h a r a c - t e r i z e d in that the auxiliary heat exchanger (72) is constructed so that no free interface of separation can set up between the rich mixture and the vapour.

3. A heat pump as claimed in Claim 2 c h a r a c - t e r i z e d in that the auxiliary heat exchanger is integral with the generator (Fig. 7, 8).

4. A heat pump as claimed in anyone of the preceding Claims c h a r a c t e r i z e d in that the auxiliary absorber is integral with the absorber and is constructed so that a free interface of separation can set up between the poor mixture and the vapour (Fig. 7, 8).

5. A heat pump as claimed in anyone of the preceding Claims c h a r a c t e r i z e d in that the auxiliary absorber is of the pipe type, in which the rich mixture channel comprises at least one pipe and the poor mixture channel comprises a chamber surrounding said pipe.

FIG.1A

FIG.1B

FIG.2

FIG.3

FIG.4

0145093

2/2

FIG.5

FIG.6

FIG.7

FIG.8